Europäisches Patentamt

European Patent Office

Office européen des brevets

(11) Publication number: **0 139 247**
**A1**

## (12) EUROPEAN PATENT APPLICATION

(21) Application number: **84111458.0**

(22) Date of filing: **26.09.84**

(51) Int. Cl.⁴: **B 01 D 53/04**
**C 01 B 13/02**

(30) Priority: **27.09.83 US 536266**

(43) Date of publication of application:
**02.05.85 Bulletin 85/18**

(84) Designated Contracting States:
**AT BE CH DE FR GB IT LI LU NL SE**

(71) Applicant: **UNION CARBIDE CORPORATION**
Old Ridgebury Road
Danbury Connecticut 06817(US)

(72) Inventor: **Dangieri, Thomas Joseph**
8 General MacArthur Dr.
Carmel 10512 N.Y.(US)

(72) Inventor: **Beck, Aaron Lamar**
6109 Lindholm Dr.
Mobile 36609 Alabama(US)

(72) Inventor: **Cassidy, Robert Thomas**
6 Malcolm St.
Waldwick 07463 N.J.(US)

(74) Representative: **Schwan, Gerhard, Dipl.-Ing.**
Elfenstrasse 32
D-8000 München 83(DE)

(54) **Improved adsorbent for rapid pressure swing adsorption process.**

(57) The performance of rapid pressure swing adsorption processes is enhanced by the use of selective adsorbent material in the novel form of millibeads of essentially smooth, rounded particles having a particle size of about −40+80 mesh, U.S. Standard Sieve Series. The millibeads are preferably molecular sieve materials, such as zeolites A, X, and Y, that, in some embodiments, is mixed with a suitable binding agent. Such adsorbent material can be advantageously packed in the adsorbent bed, with minimized settling and crushing in use, so that compacted plug formation is avoided and gas flow to and from the bed, and process performance are enhanced over the course of continuous cyclic processing operations.

EP 0 139 247 A1

## IMPROVED ADSORBENT FOR RAPID PRESSURE
## SWING ADSORPTION PROCESS

### Background of the Invention

#### Field of the Invention

The invention relates to rapid pressure swing adsorption processing for the separation of gases. More particularly, it relates to improved adsorbent material for enhancing such rapid pressure swing adsorption operations.

#### Description of the Prior Art

By the development of the rapid pressure swing adsorption process, the advantages of the well-known pressure swing adsorption technology has been extended to particular applications such as the production of breathing oxygen from air. Such enriched oxygen is used by persons suffering from respiratory ailments, and for a variety of other purposes, e.g. for high altitude breathing in aircraft. The rapid pressure swing adsorption, i.e. RPSA, process overcomes the disadvantages inherent in conventional pressure swing adsorption techniques as applied to such applications, namely low adsorbent productivity in the applying of breathing oxygen to individual users or in supplying other desired product gases for particular uses.

As described in the Earls et al patent, U.S. 4,194,891, and in the Jones et al patent, U.S. 4,194,892, the RPSA process involves a cyclic process of feed and adsorption at higher pressure, exhaust and repressurization carried out on a very

D-14,033

rapid basis, in less than about 30 seconds per cycle, in a manner not feasible in the conventional PSA processing cycles used to produce oxygen, hydrogen or other gases on a large size commercial scale. Desirable features of the RPSA process are the compactness and light weight of the systems used to carry out the process. These features pertain to RPSA processing without sacrifice in oxygen or other product gas enrichment or in the generally high productivity obtainable by the RPSA process and system.

The patents indicated above disclose the desired use of small sized ground adsorbent particles in the 40 x 80 mesh size range in RPSA processing operations. A preferred adsorbent material for use in home oxygen concentrators and other RPSA applications is conventional 13X molecular sieve adsorbent, otherwise generally known as zeolite X, as described and claimed in the Milton patent, U.S. 2,882,244. The manufacturing procedure used to obtain this material for commercial use involves formation of the zeolite crystals followed by filtration, washing and drying of the crystals as described in the Milton patent with respect to said 13X adsorbent. The crystals are then blended with binder and extruded by conventional means, and the extended pellet thus formed is crushed or ground and screened to obtain the proper size distribution. The ground material of proper screen size is then calcined to reduce its residual water content and is re-screened to the final particle size distribution. This procedure, while producing ground adsorbent material of the desired size range, is very time consuming and labor intensive. In addition, a considerable amount of waste zeolite material is generated during the crushing and screening operations, adding directly to the adsorbent manufacturing costs and indirectly to the cost of RPSA operations using such conventional adsorbent material.

When ground adsorbent of the desired particle size range are loaded into each adsorbent bed vessel for use in the practice of the RPSA process, the uneven surfaces characteristic of such ground particles hinder a uniform packing of the adsorbent bed even when the bed is subjected to external vibration. In addition, the ground particles also lack the structural integrity of a formed product, due to the crushing phase employed in the production of the particles. Both of these conditions promote further settling of the adsorbent beds during use in cyclic RPSA processing operations, resulting in the accumulation of adsorbent dust in other portions of the RPSA system. The lack of crush strength of the ground particles also presents problems in assembly and operation of the RPSA processing vessels. Each such vessel is commonly assembled with a containment device, usually spring loaded, adapted to keep the adsorbent material in place within the vessel. This precaution is necessary because the fluidization velocity of the particles is typically exceeded during normal operation of the system. The static force of the spring, however, together with the

D-14,033

dynamic forces of gas flow and of the spring, tend to cause localized crushing of the adsorbent at the end of the bed, containing said spring or other containment device. As a result, a compacted plug of adsorbent up to a depth of two inches has been observed to exist in RPSA vessels after a period of cyclic operation. This plug formation restricts gas flow into and out of the adsorbent beds, and contributes to an increased, non-uniform pressure drop measured across the length of the vessel after such a period of cyclic operation. In addition to such plug formation, the premature failure of beds has been observed with the bed of ground mesh material actually collapsing as a result of the absorbent characteristics referred to above.

Conventional processing operations have been somewhat hampered, therefore, as a result of deficiencies associated with the commercially available adsorbent material, and its use in the rapid cycling between adsorption, exhaust and repressurization steps in the practice of the RPSA process. The filling of adsorbent vessels in a reasonably reproducible manner, so that similar gas flow characteristics will be exhibited from bed-to-bed, has also proven very difficult to accomplish. Extreme adsorbent settling, and subsequent containment plate failure, have resulted in attrition and dusting of the adsorbent and even outright blow-out of material from vessels during the cyclic operation. While such circumstances have had to be tolerated because of the existing limitations pertaining to available materials, it is nevertheless highly desirable that improved RPSA processing, and improved adsorbent materials, be achieved so that the full benefits of the beneficial RPSA processing technique can be fully realized in practical commercial operations.

It is an object of the invention, therefore, to provide an improved RPSA process and adsorbent for use therein.

It is another object of the invention to provide an RPSA process having improved gas flow and overall performance characteristics and minimized plug formation within the adsorbent beds.

It is another object of the invention to provide an RPSA process in which similar gas flow conditions are exhibited from bed-to-bed over the course of continuous cyclic operations.

It is a further object of the invention to provide an adsorbent material capable of being packed in and used in RPSA vessels with minimized settling and crushing over the course of continuous cyclic operations.

It is a further object of the invention to provide an improved adsorbent material having enhanced structural integrity and high crush strength, capable of avoiding undue attrition and dusting during cyclic RPSA processing operations.

With these and other objects in mind, the invention is hereinafter set forth in detail, the novel features thereof being particularly pointed out in the appended claims.

## Summary of the Invention

The RPSA process is carried out using a novel millibead fraction as the adsorbent material comprising each adsorbent bed. Such millibeads of essentially smooth, rounded particles of a particle size generally in the -40+80 mesh range, are readily packed in the adsorbent vessels with minimized settling and crushing. Upon use in the cyclic RPSA process, the structural integrity and high crush strength of the millibeads result in reduced attrition and dusting and the avoidance of plug formation within the bed. As a result, improved RPSA performance is achieved in each adsorbent bed, including enhanced similarity of gas flow conditions from bed-to-bed over the course of continuous cyclic processing operations.

## Detailed Description of the Invention

In accomplishing the objects of the invention, the RPSA process is carried out using a novel form of known, commercially available adsorbent materials. Thus, the adsorbent vessels of an RPSA system are filled with adsorbent particles in the form of millibeads of the desired particle size, with such millibeads having highly desirable characteristics that overcome the difficulties associated with the conventional, commonly available ground form of adsorbent typically used in the practice of the RPSA process. As will be described in further detail below, the novel millibeads advantageously employed to enhance RPSA processing operations have not heretofore been available in the art as a commercial adsorbent material. Such millibeads greatly enhance the practice of the RPSA process, however, both in terms of the preparation of adsorbent vessels for use and in the actual use

D-14,033

of such vessels under the conditions of rapid cycling that are characteristic of the RPSA process.

The RPSA process, as herein contemplated can advantageously be employed for the selective adsorption of at least one or more readily adsorbable gas components from a feed gas mixture of said component with at least one less readily adsorbable component. In the process, each adsorbent bed in the RPSA system undergoes, on a cyclic basis, a processing sequence that includes (1) feeding the gas mixture to the feed end of the bed for selective adsorption of the more readily adsorbable gas component of the mixture at high adsorption pressure, with withdrawal of the less readily adsorbable gas component as product effluent from the opposite or discharge end of the bed, (2) countercurrently depressurizing the bed, with the more readily adsorbable gas component thereby being exhausted from the feed end of the bed, and (3) repressurizing the bed from the lower pressure reached during countercurrent depressurization to a higher intermediate pressure or to the high final adsorption pressure for the adsorption of the more readily adsorbable component from additional quantities of the feed gas mixture during the next processing cycle in the bed. As will be further described below, the RPSA cyclic processing sequence that includes such high pressure feed-adsorption, exhaust and repressurization steps may also include a delay period to further enhance the overall process.

In the practice of the invention, the RPSA process can advantageously be carried out using a

D-14,033

single adsorbent bed, although the use of multi-bed systems is also within the scope of the invention. The Jones et al. patent referred to above, i.e. U.S. 4,194,892, discloses embodiments of a single bed RPSA system, although it will be appreciated that other embodiments of single-bed systems can also be employed within the scope of this invention. Those skilled in the art will appreciate that the particular exhaust/feed ratio employed in any specific application will depend upon a variety of factors, including the gas separation to be accomplished, the product enrichment and recovery requirements pertaining thereto, the adsorbent employed, the productivity requirements and the like. In general, it has been observed that somewhat lower exhaust/feed ratios can often be employed for some multi-bed applications, e.g. as in the multi-bed RPSA systems of said Earls, et al. U.S. 4,194,891, than when a single adsorbent bed is employed. Significantly, however, the exhaust/feed ratios employed can, in any event, be made desirably lower than were required in the single bed process disclosed in the Jones et al. patent, although certain embodiments may also exist in which the use of higher exhaust feed ratios, such as those of the Jones et al patent, are preferred. It has also been found that highly desirable enhancement in RPSA performance is achieved at desired exhaust/feed ratios of less than 2/1, e.g. from about 0.4/1 to about 1.8/1, with the feed gas mixture being passed to an adsorbent bed, or series of beds, configured so as to achieve a particular reduction in cross

D-14,033

sectional area between the feed end at which the feed gas mixture is introduced to the bed and the discharge end thereof at which product effluent is discharged from the bed. More particularly, the ratio of the cross sectional area at the feed end of each bed to that at the discharge end thereof should be within the range of from about 2/1 to about 20/1, especially from about 3/1 to about 6/1. Particularly desirable results have been achieved in embodiments of the process carried out at an area reduction on the order of about 4/1. In other embodiments, it will be understood that it may be desirable to employ an exhaust step time of at least twice the feed step time in fulfillment of the overall requirements of given applications. Various bed lengths may be employed depending on the amount of adsorbent required for a given separation provided that the indicated reduction in cross sectional area is achieved. It should be noted, however, that the bed length may be related to the exhaust feed ratio, the particular area reduction and to the overall total cycle time to define particularly advantageous embodiments of the RPSA process. It is particularly pointed out that the concept of designing adsorption vessels into various shapes is not, of itself, new in the art. Thus, West German patent No. 2,901,938, issued February 8, 1979, refers to the use of a tapered bed arrangement used to achieve uniform gas flow and constant temperature along the adsorption zone. The patent did not, however, disclose or suggest the significant improvement in process performance

D-14,033

obtainable by the combination of particular features disclosed and claimed herein. As noted in the background discussion above, the Jones et al. patent disclosed, with respect to single bed RPSA systems, the use of three bed sections decreasing in cross sectional area from the feed to the discharge end of the bed to increase the utilization of the adsorbent, and thus to increase productivity. Jones et al. also indicates that the bed taper can be achieved by continuously reducing the cross sectional area of the bed rather than by reducing it in discrete steps. It is likewise within the scope of the invention to similarly achieve the desired reduction in cross sectional area from the feed to the discharge end of the bed in either discrete steps or by means of a continuous taper. By employing the specific cross sectional area reduction herein specified in conjunction with advantageous exhaust/feed ratios and other operating conditions, major reductions in power consumption and required adsorbent inventory can be achieved while also obtaining product purity and/or recovery levels and productivity not obtainable in the practice of the single bed RPSA process of Jones et al.

In addition to the high pressure feed-adsorption, exhaust and repressurization steps referred to above, it has been indicated that the process can employ a delay period as part of the overall RPSA processing sequence. Thus, the processing cycle may comprise, in sequence a single bed or in each bed of a multi-bed system, the steps

D-14,033

of feed, delay, exhaust and repressurization. It will be appreciated that the terms "feed" step or "high pressure feed-adsorption", or the like are used to denote that period of time during which a pressurized feed gas mixture is introduced to the feed end of an adsorbent bed at the high adsorption pressure of a given application. The term "exhaust" and the like denotes that period of time, or portion of the overall cycle, when gas at a lower pressure than the high feed-adsorption pressure is caused to leave the bed at said feed end thereof, i.e., in a countercurrent depressurization step. While such countercurrent depressurization will inherently be to a lower pressure than the adsorption pressure, those skilled in the art will appreciate that it is generally desirable to depressurize the bed to as low a pressure as possible so that the more readily adsorbable gas component will be desorbed and swept from the bed to the fullest practical extent during the countercurrent depressurization step. Accordingly, the countercurrent depressurization or exhaust step will commonly be continued until atmospheric or sub-atmospheric pressures are reached at the feed end of the bed, the latter necessarily involving a vacuum cycle. The delay period in the indicated processing sequence is a period of time during which no feed gas mixture is being fed to the bed and no gas is being exhausted from the bed by countercurrent depressurization during the delay period. During this period, the gas pressure in the bed will decrease from the adsorption pressure level as gas present in the bed travels therethrough to the discharge end thereof and passes from this end of the bed during the delay period.

In addition, the RPSA process can be practiced in a feed, exhaust and delay sequence in which said delay period constitutes the repressurization step of the overall cycle. In this embodiment, the delay period again occurs with no passage of gas to the feed end of the bed and with no exhaust from the feed end of the bed by countercurrent depressurization during the delay period. The pressure within the bed increases during this delay period as product quality gas passes from the downstream product manifold into the discharge end of the lower pressure bed during this delay period following the exhaust step. The delay step thus constitutes a partial countercurrent repressurization of the bed to a higher intermediate pressure. Upon commencing of the feeding of the feed gas mixture to the bed at high adsorption pressure, the bed will be found to very rapidly increase to said high adsorption pressure from said intermediate pressure so that a separate repressurization step, in addition to said delay period, becomes unnecessary. In another embodiment, the processing sequence may comprise a feed, delay, exhaust and further delay cycle. In this case, each delay period functions as described above with respect to embodiments employing only a single delay period, after either the feed step or after the exhaust step.

As indicated above, the invention may be practiced in a single bed RPSA system or in systems having at least two adsorbent beds, with from two to ten adsorbent beds, more commonly with from two to five adsorbent beds generally being employed. In many practical commercial applications, it will be understood that two bed, three bed or four bed systems will be particularly advantageous. Those skilled in the art will also appreciate that, when four or five or more beds are employed in an adsorption system, it is generally desirable to arrange the system so that the feed gas mixture can be passed to at least two adsorbent beds at any particular time, typically in overlapping sequence. In such systems, of course, each bed undergoes the particular processing sequence being employed, on a cyclic basis, as continuous operations continue in the system.

The practice of the invention is particularly advantageous at adsorption pressures above about 10 psig, although the invention can also be employed at the lower pressure levels to which the RPSA process has successfully been applied. The invention is preferably applied at adsorption pressures of from about 25 to about 60 psig, although pressures above this range, e.g. up to about 75 psig or higher, may also be employed.

While the invention can be practiced with respect to its various embodiments within the time limitations heretofore applicable to RPSA systems, e.g. up to about 30 seconds, the total operating or cycle time for each processing cycle is preferably on the order of from about 2 to about 10 seconds for oxygen recovery by air separation. Similarly, the feed step at adsorption pressure can vary widely within such overall limits. A feed step at high pressure consuming from about 0.4 to about 1.2 seconds has been found particularly convenient for certain practical low volume commercial applications.

In any RPSA process wherein the flow of gas from the downstream product manifold into the adsorbent bed countercurrent to the direction of feed gas flow is not physically restricted, as by an orifice, valve, etc., the creation of a pressure differential across the adsorbent bed is essential for the effective separation of gas components. This is accomplished by operating the cycle at a very rapid rate and by the use of small particle size adsorbent material as indicated above. As feed gas enters the adsorbent bed, both the restricted flow path and the fact that selective adsorption decreases the number of gas molecules traveling through the bed contribute to the reduction in molar gas velocity in the bed. By the restricting of these molecules into smaller and smaller cross sectional areas, this undesirable effect is overcome, and the molar gas velocity required for a satisfactory RPSA performance can be maintained. The combination of particular bed configurations based on cross sectional area reduction, coupled with desirable exhaust/feed ratios for a given application, enables outstanding RPSA performance to be achieved in both single and multi-bed embodiments. Such advantageous RPSA performance is enhanced by the carrying out of the process using the millibeads herein disclosed and claimed, said

D-14,033

millibeads not previously having been known for use in RPSA processing and, indeed, not having been available as a commercial product for any processing purpose.

It should be noted that the bead form of various commercially available molecular sieve adsorbents have been employed for a variety of industrial purposes. In the making of such beads, the zeolite or other adsorbent material is typically mixed continuously with a suitable binder, grown to the desired size, recovered in a cyclone, screen or other separator unit, calcined and screened to the desired size. Oversized and undersized beads for a given production run are generally recycled for mixture with fresh adsorbent and binder, but may also be discarded as waste material. Commercial operations of this type have been used to produce beads of various sizes, all considerably larger than the millibeads disclosed and claimed herein for use in the RPSA process. For example, 4x8, 8x12, 10x20 and 16x40 mesh beads, U.S. Standard Sieve Series, have been commercially produced. In particular, 8x12 mesh adsorbent beads has been commercially produced for use in large size pressure swing adsorption units used to produce oxygen on an industrial scale. Those skilled in the art will appreciate that such PSA units are much larger and operate on a much longer cycle time than is employed in the fast cycling RPSA process and system to which this invention is specifically directed. Beaded 13X adsorbent material commercially available in the 10x20 or 16x40 mesh size has been investigated for potential use in RPSA processing, but has generally been found unsuitable for such application. Accordingly, the ground adsorbent material referred to above has continued to be employed in RPSA units despite its recognized limitations for this application, because of the absence heretofore of any feasible commercial alternative.

It has now been found that a portion of the undersized material formed during commercial bead production operations can be advantageously employed as the adsorbent material in RPSA processing operations. The undersized material, presently recycled to the bead production operation, can thus be recovered from the recycle operation and screened so as to separate a desired size fraction suitable for use in the RPSA process. The remaining portion of undersized material may still be recycled for the production of larger commercial beads. For use in the practice of the invention in RPSA processing operations, millibeads are advantageously employed in the 40x80 mesh size, U.S. Standard Sieve Series. In particular applications, of course, the millibeads may be employed in even more limited size ranges, such as in the 40x60 mesh range. Those skilled in the art will also appreciate that the 40x80 mesh range referred to above should not be construed as precluding the presence of some millibeads having a size larger than 40 mesh, or smaller than 80 mesh, in an adsorbent mixture having at least a major portion of millibeads essentially in the -40+80 mesh range desirable for RPSA process performance. It will also be understood that, while

D-14,033

the millibeads advantageous for use in the RPSA process can conveniently be obtained by screening the undersized material recycled in the commercial production of larger sized adsorbent beads, such millibeads can also be produced by continuously mixing adsorbent and binder, and allowing the beads thus formed to grow to the desired millibead size rather than to the larger sizes formed in the present commercial adsorbent bead production operations. The desired millibeads would then be captured in a screen separator or by other suitable separation means, calcined, and subjected to final screening consistent with the particular size distribution desired for any given application. Undersized material can, of course, be recycled for addition to the adsorbent-binder mixture.

It is within the scope of the invention to employ millibeads formed of any adsorbent material suitable for a desired gas separation to be accomplished by the RPSA process. Thus, the adsorbent formed into millibeads of the indicated size range may comprise any commercially available adsorbent capable of selectively adsorbing one or more less readily adsorbable components from a gas mixture thereof with more readily adsorbable gas components. As indicated in the Earls et al patent, U.S. 4,194,891, and in the Jones et al patent, U.S. 4,194,892, a variety of adsorbent materials may be employed in the RPSA process and in the practice of this invention. Such adsorbents include activated carbon, natural zeolites and a variety of synthetic crystalline zeolites. For some applications, such

D-14,033

as in home oxygen concentrators, it has been found particularly desirable to employ zeolite X adsorbents as described in the Milton patent, U.S. 2,882,244. The sodium form of such zeolites are commonly referred to as 13X adsorbent. Zeolite A materials as described in the Milton patent, U.S. 2,882,243, such as the predominately calcium form thereof commonly referred to as type 5A adsorbents, are also suitable adsorbents for use in the form of millibeads in the practice of the invention. Zeolite Y, described in U.S. 3,130,007, is another adsorbent material that may be employed for purposes of the invention. It will be understood that the particular adsorbent material employed in any given application will depend upon a variety of factors pertaining to that application, including the gas separation to be made in that application. As in conventional pressure swing adsorption technology, the invention can be applied for a variety of practical gas separation applications concerning which the advantages of a rapid pressure swing adsorption cycle and high adsorbent productivity are desired. In addition to home oxygen concentrators as referred to above, hydrogen separation and purification from gas mixtures containing CO and/or methane is illustrative of a number of other gas separation operations to which the invention can be applied in appropriate circumstances. It is also within the scope of the invention to carry out air separation in applications wherein nitrogen is the desired product and oxygen is the more readily adsorbable component. In such embodiments, 4A

D-14,033

zeolite or other commercially available adsorbents would be utilized in the millibead form herein described and claimed under processing conditions such that nitrogen rather than oxygen is the less readily adsorbable component. The overall cycle time limitations of up to about 30 seconds would apply in such applications, with the total operating time for each cycle being preferably from about 4 to about 20 seconds. It is also within the scope of the invention to carry out RPSA operations in which the more readily adsorbed component of the gas mixture is actually the product desired, with said component being removed from the RPSA system and recovered upon the exhaust step of the RPSA process.

The millibeads of the invention, as indicated above, are obtainable from off-size materials associated with large scale production runs used to produce commercial beads of much larger dimensions than said millibeads. Such off-size material, which would otherwise be recycled, must, of course, have an adsorbent level and binder content conforming to the applicable specifications established by the manufacturer for given product applications. Such specifications will generally be the same as for conventional ground adsorbent material. It should be noted, however, that binderless millibeads may also be employed within the scope of the invention, with such binderless millibeads having greater adsorptive capacity and higher mass transfer rates than similar bound zeolite or other adsorptive material. While the use of the desired fraction of off-size material presently recycled in commercial bead production operation is highly desirable, it should also be appreciated that, in the absence of such available off-size material, the production of adsorbent in millibead form may actually constitute a process simplification vis-a-vis conventional practice in that the number of processing steps required to obtain the desired product is less than is required to produce the conventional ground adsorbent conforming to applicable product specifications.

The millibeads of the invention are found to possess superior bead packing characteristics when charged to adsorption vessels. Moreover, less vibration of the vessels is required to facilitate vessel filling operations as compared with the conventional use of ground adsorbent. The millibeads, which have an essentially smooth, rounded form, are found to have a superior crush strength over that of said ground adsorbent. This enables the millibeads to be advantageously packed in an adsorbent bed within a vessel with minimized settling and crushing. When employed in the cyclic RPSA process, the millibeads likewise are not susceptible to the settling and crushing, with accompanying dust formation, that occurs when conventional ground adsorbent is employed. As a result, gas flow and RPSA performance are enhanced by the use of said millibeads. Undesired plug formation within the bed is also minimized as had clearly been observed at the end of the bed at which the containment device is positioned, typically at the feed end of the bed where gas velocities, which

D-14,033

cause attrition of ground particles, are the highest in the adsorption process. The problem of premature bed failure, which handicaps conventional operations with ground adsorbent, is obviated by the use of millibeads as herein described and claimed.

The following example relating to experimental runs in intended to further illustrate the practice of the invention, and the benefits obtained thereby. The description of such runs should not be construed, however, as limiting the scope of the invention as herein described and recited in the appended claims.

### Example

The superior packing and crush strength characteristics of the millibeads of the invention as compared with corresponding conventional ground adsorbent of the same particle size distribution was demonstrated using 13X zeolite adsorbent of -40+80 particle size range.

A measured amount of each sample of 13X zeolite was placed in a die, and force was exerted on a ram placed on top of the samples. The amount of depression of each sample under the influence of said force was then measured. In this static test, the millibeads showed a gradual compaction up to a force of 4,150 pounds exerted in the ram. A decrease of 10% from the starting run depth into the die was noted at the maximum pressure exerted. Solid compaction of the particles extended to a depth of 3/8 of an inch from the ram force, but this compaction was easily broken up and did not constitute a plug formation that would adversely

D-14,033

affect cyclic RPSA processing operations. When, on the other hand, the corresponding ground mesh sample was subjected to a similar test procedure, distinct changes in the amount of compaction were noted over the course of incremental pressure changes. An initial 10-15% decrease in the original sample height was measured and attributed to an initial settling of particles. When the force exerted on the ground adsorbent reached 2,000 pounds, considerable fracturing of the particles and compaction occurred. An overall 25% decrease from the starting ram depth into the die was noted, and solid compaction of the ground material measured over 2 inches in depth. Unlike the compaction that occurred with millibeads, plug formation resulted upon compaction of the ground adsorbent, and this plug formation could not be easily broken up.

Another set of experiments demonstrated that localized crushing and particle compaction just below the follower plate - particle containment assembly can produce a plug of particles that hinders gas flow into and out of an adsorption vessel, with a resulting increase in pressure drop over the length of the vessel. Samples of both millibeads and of ground mesh 13X zeolite of the same - 40+80 size distribution were placed in a vessel in which a containment assembly employed nitrogen gas under pressure to exert increasing amounts of force on the adsorbent. The pressure differential between the top and bottom of the bed was measured at the same exit flow of gas passing through the bed.  In each such experiment, the millibead compaction showed a pressure drop increase of less than 0.5 psi.  Ground mesh product under the same test conditions, however, exhibited compaction causing an increase of 2.5-3 psi.  Those skilled in the art will appreciate that such an increase in pressure drop across the length of the adsorbent vessel due to compaction of the ground mesh adsorbent, with resultant plug formation, appreciably restricts gas flow into and out of the vessel and thus adversely affects the performance of the cyclic RPSA process.  In this regard, it has been determined that RPSA performance in the practice of the invention, wherein millibeads have been substituted for conventional ground mesh adsorbent, shows very little variation in RPSA test runs carried out in laboratory experiments.  Thus, the performance of the invention, in terms of oxygen recovered from an available air supply and of productivity based on the amount of oxygen delivered as product at a given purity in a given time period with respect to the amount of adsorbent employed, were comparable to the advantageous performance levels obtainable during the initial periods of operation of a conventional RPSA system.  This is of significance since the performance of the RPSA system using the millibeads of the invention can be maintained over a prolonged period of cyclic operation with only a very gradual decrease in performance due to deactivation of the bed of millibead adsorbent.  In the practice of the conventional RPSA process using ground mesh

D-14,033

adsorbent, the advantageous performance levels of initial operaton are not so maintained over the course of prolonged periods of cyclic operation. To the contrary, process performance of conventional systems tends to decrease at a relatively rapid rate due to plug formation within the adsorbent bed, premature bed failure and such circumstances occasioned by the deficiencies referred to above with respect to the commercially available ground mesh adsorbent material and its use in the rapid cycling between adsorption, exhaust and repressurization steps in the practice of the RPSA process.

It will be appreciated that various changes and modifications can be made in the details and in the conditions employed without departing from the scope of the invention as set forth in the appended claims. In many of the multi-bed embodiments of the invention referred to above, the feed gas is continuously being passed to the RPSA system. Thus, upon completion of the adsorption step in one bed, the feed gas flow to that bed is terminated, and said feed gas flow to the next bed in the processing sequence is commenced. Where a large number of beds are employed, it may be desirable to pass the feed gas to more than one bed at any given time, in a predetermined overlapping cyclic processing sequence. It is also within the scope of the invention to temporarily discontinue the passing of feed gas to the adsorption system upon completion of the feed or adsorption step to an individual bed in the system. In such embodiments, which are highly desirable for particular embodiments, the time of said feed step to each bed and the time discontinuity of feed before commencing the passing of feed gas to the next succeeding bed is maintained approximately the same throughout the processing cycle. Those skilled in the art will appreciate that various mechanical means can be devised to produce the essentially uniform feed periods and feed discontinuity periods when such discontinuity is employed in multi-bed embodiments of the invention. One very convenient and desirable means for achieving such discontinuity is by use of a rotary valve arrangement that will permit the feeding of the feed gas mixture to each bed or set of beds in proper sequence in accordance with the overall processing cyclic employed in a given application. The Snyder patent, U.S. 4,272,265, discloses a rotary valve arrangement as developed for a continuous feed application of pressure swing adsorption technique for oxygen-enrichment by air separation. Such a rotary valve can be modified by making the part or inside diameter of the sleeve smaller so that an alignment of parts and an out-of-alignment condition occur in proper sequence to accomplish the feed and temporary discontinuance of feed desired in a given application.

Other mechanical features of the apparatus used to perform the process of the invention will be subject to variation, change or adjustment depending on the circumstances pertaining to a particular application. RPSA systems generally operate, in order to effectively function within the time limits

D-14,033

of the rapid overall processing cycle involved, with no orifice, valve or other device physically restricting the flow of gas from the downstream product manifold into the adsorbent bed countercurrent to the direction of feed gas flow in the bed. In certain multi-bed embodiments, the RPSA system will be such as to enable gas to flow directly from one bed to another, as during the repressurization of the bed into which said gas is being passed, through the common product manifold joined to the discharge end of each bed. Thus, no intermediate product storage vessel or tank need be positioned directly in the flow path from one bed to another through said common product manifold. It is also within the scope of the invention, however, to employ such a product storage vessel in the product manifold means downstream of the adsorbent beds. Where a product storage vessel is employed in multi-bed embodiments, it is possible to position such vessel in the product manifold so that gas passing from one bed to another passes therethrough or to provide such vessel outside of the direct flow path through the product manifold from one bed to another. It should be noted that such a product storage vessel can also be employed in single bed embodiments of the invention. The single product manifold will be understood to assure that a supply of high pressure product gas will be available for countercurrent repressurization purposes during the delay period regardless of the overall processing sequence of the RPSA process or the rate at which product gas is being withdrawn from the system.

While the millibeads of the invention have not heretofore been available in the art as a commercial adsorbent material, it will be appreciated by those skilled in the art that adsorbent material in the form of such novel millibeads can be produced using any desired combination of molecular sieve or other adsorbent material and any suitable binder material. While colloidal silica is a convenient and generally preferred binder, it is thus within the scope of the invention to employ any other suitable binder, e.g., boehmite alumina, a hydrous aluminum oxide. The binder will generally be mixed with the catalyst composition in an amount within the range of from about 1% to about 40%, preferably from about 15% to about 25%, by weight based on the total weight of adsorbent material with binder. Those skilled in the art will also appreciate that a suitable millibead composed entirely of zeolite or other adsorbent material can be formed without the addition of an inert binder. This millibead has been referred to herein as a binderless material. When such millibeads comprise a screened portion of off-size rejected material generated in the conventional production of larger size beads, the binder-adsorbent combination or the binderless composition will, of course, be that employed for purposes of said conventional bead production operations.

The cyclic RPSA process is desirably carried out under bed conditions such that a uniform pressure drop condition can pertain along the length of the bed. Upon plug formation during the practice of the process using conventional ground adsorbent, the increased pressure drop resulting therefrom is operative across the length of the plug and does not constitute an increase in pressure distributed uniformly over the overall length of the bed. For this reason, the undesired plug of compacted adsorbent hinders the flow of gas into and out of the bed at the end thereof subjected to said plug formation, thereby adversely affecting the rapid cyclic operation of the RPSA process. By using adsorbent in the novel millibead form as herein disclosed and claimed, the desired uniform pressure drop across the length of the bed can be maintained over the course of continuous cyclic operation, thus contributing to the improved overall performance obtainable in the practice of the invention. An important aspect of the improved performance obtainable in the practice of the invention resides in the greater predictability of results made possible by the use of adsorbent material in the novel millibead form. The practice of the invention thus enables the RPSA process and system to be controlled more like a mechanical system than one dependent upon the properties and characteristics of the adsorbent material employed therein, thereby enabling greater consistency and predictability of performance to be achieved.

The enhanced predictability of performance achieved by the invention is of particular significance in multi-bed RPSA systems. If, for example, a three bed system is to be employed, the three beds may be selected, in terms of compatible permeability and mechanical gas flow characteristics, from a batch of six such beds. It has been found that, from bed-to-bed, the conventional ground mesh material may vary on the order of ±20% from the desired norm or specifications for the adsorbent as produced for a given application. By recovering and employing the adsorbent in the novel form of the millibeads as herein described, such variation from the desired norm is appreciably reduced to less than ±10%. This greater consistency of millibead adsorbent material enables the bed-to-bed matching of adsorbents to be accomplished much more readily and simply than is possible using conventional ground mesh material. The very extensive amount of time required for adsorbent bed testing to assure adequate bed-to-bed matching in systems using conventional ground adsorbent can be greatly reduced when the novel millibeads of the invention are substituted for the conventional ground adsorbent. The desirable reproducibility that is characteristic of adsorbent beds comprising novel millibeads thus contributes significantly to the keeping down of the overall costs associated with the practice of the RPSA process. Such reduction of cost, coupled with enhanced performance, in terms of adsorbent productivity and product recovery, and extended stability over the course of continuous, cyclic operation, render the use of adsorbent in the novel form of the millibeads of the invention an important development in the making available of the RPSA technology for home medical oxygen and other medical and industrial applications on a practical commercial basis.

CLAIMS

1. In a rapid pressure swing adsorption process for the selective adsorption of at least one more readily adsorbable gas component from a feed gas mixture in an adsorbent system having an adsorbent bed that undergoes a cyclic processing sequence that includes (a) feeding such gas mixture to the feed end of the bed for adsorption at high adsorption pressure, with discharge of a less readily adsorbable gas component as product effluent from the discharge end of the bed, (b) countercurrently depressurizing said bed, thereby exhausting the more readily adsorbable component from the feed end of the bed, and (c) repressurizing said bed from the lower pressure reached during countercurrent depressurization, the total cycle time being less than about 30 seconds, the improvement comprising contacting said feed gas mixture with said adsorbent bed containing particles in the form of millibeads of adsorbent material, such millibeads being essentially smooth, rounded particles having a particle size of about -40+80 mesh U.S. Standard Sieve Series, whereby gas flow and process performance are enhanced and undesired plug formation within the bed is minimized.

2. The process of Claim 1 in which said adsorbent material comprises molecular sieve material.

D-14,033

3. The process of Claim 2 in which said molecular sieve material comprises zeolite A.

4. The process of Claim 2 in which said molecular sieve material comprises zeolite X.

5. The process of Claim 2 in which said molecular sieve material comprises zeolite Y.

6. The process of any one of the preceding Claims and including a binder in said millibeads.

7. The process of any one of Claims 1 to 5 in which said millibeads comprise binderless millibeads.

8. The process of any one of the preceding Claims in which said feed gas mixture comprises air.

9. The process of Claim 8 in which said less readily adsorbable gas component comprises oxygen.

10. The process of any one of the preceding Claims in which said feed gas mixture is passed to the feed end of an adsorption system having at least two adsorbent beds.

11. The process of Claim 10 in which from 2 to 5 adsorbent beds are employed in said system.

12. The process of Claim 11 in which from 2 to 3 adsorbent beds are employed in said system.

13. The process of any one of the preceding Claims in which the feed gas mixture is passed to said adsorption system having one or more adsorbent beds configured such that the ratio of the cross sectional area thereof at the feed end to that at the discharge end of the bed or each bed, respectively, is from about 2/1 to about 20/1.

14. The process of Claim 13 in which the exhaust step time is less than twice the feed step time.

15. The process of Claim 13 in which the exhaust step time is at least twice the feed step time.

16. The process of one of Claims 13 to 15 in which the ratio of the cross sectional area at the feed end of the bed or beds to the discharge end thereof is from about 3/1 to about 6/1.

17. The process of one of Claims 13 to 16 in which the exhaust/feed ratio is from about 0.4/1 to about 1.8/1.

18. The process of any one of the preceding Claims in which said adsorption pressure is from about 10 to about 75 psig.

19. The process of Claim 18 in which said bed is countercurrently depressurized so as to reduce the pressure at the feed end of the bed to about atmospheric pressure during the exhaust steps.

20. The process of Claim 18 in which said bed is countercurrently depressurized to a sub-atmospheric pressure at the feed end of the bed during said exhaust step.

21. The process of Claim 11 and including temporarily discontinuing the feeding of said gas mixture to the adsorption system upon completion of the feed step to each bed in the system, the time of said feed step to each bed and the time of discontinuity of feed before commencing the passing of said gas mixture to the next succeeding bed being approximately the same throughout the processing cycle.

22.    An improved adsorbent for use in the rapid pressure swing adsorption process for the selective adsorption of at least one more readily adsorbable gas component from a feed gas mixture in an adsorbent system having at least one adsorbent bed that undergoes a cyclic processing sequence that includes (a) feeding said gas mixture to the feed end of the bed for adsorption at high adsorption pressure, with discharge of a less readily adsorbable gas component as product effluent from the discharge end of the bed, (b) countercurrently depressurizing the bed, thereby exhausting the more readily adsorbable component from the feed end of the bed, and (c) repressurizing said bed from the lower pressure reached during countercurrent depressurization, the total cycle time being less than about 30 seconds, comprising: millibeads of adsorbent material, said millibeads being of essentially smooth, rounded form and having particle size of about -40+80 mesh. U.S.Standard Sieve Series, whereby said improved adsorbent can be advantageously packed in said adsorbent bed with minimized settling and crushing, so as to minimize plug formation and enhance gas flow and performance of the process over the course of continuous cyclic operations.

23.    The adsorbent of Claim 22 in which said adsorbent material comprises molecular sieve material.

24.    The adsorbent of Claim 23 in which said molecular sieve comprises zeolite A.

25.     The adsorbent of Claim 23 in which said molecular sieve comprises zeolite X.

26.     The adsorbent of Claim 23 in which said molecular sieve comprises zeolite Y.

27.     The adsorbent of any one of Claims 22 to 26 and including a binder in said millibeads.

28.     The adsorbent of any one of Claims 22 to 26 in which said millibeads comprise binderless millibeads.

29.     The adsorbent of Claim 27 in which said molecular sieve comprises zeolite X, the binder being present in an amount within the range of 1% to about 40% by weight based on the total weight of said millibeads of adsorbent and binder.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,A | EP-A-0 008 619 (UNION CARBIDE)  *Claim; examples + tables* | 1-5,8-12,14-26 | B 01 D 53/04 C 01 B 13/02 |
| D,A | GB-A-2 013 101 (BENDIX CORP.) *Figure 3; page 5, lines 88-104* | 13 | |

TECHNICAL FIELDS SEARCHED (Int. Cl.4)

B 01 D 53/00

The present search report has been drawn up for all claims

| Place of search THE HAGUE | Date of completion of the search 21-01-1985 | Examiner BOGAERTS M.L.M. |
|---|---|---|